# EUROPÄISCHE PATENTSCHRIFT

(11) **EP 0 844 830 B1**
(45) Veröffentlichungstag und Bekanntmachung des Hinweises auf die Patenterteilung: **25.10.2000**
(21) Anmeldenummer: 96928433.0
(22) Anmeldetag: 08.08.1996
(51) Int. Cl.: A23J 3/10, A23J 3/08, A23L 1/305, A23C 11/04, A23C 9/20

(54) **PROTEINZUSAMMENSETZUNG**
PROTEIN COMPOSITION
COMPOSITION DE PROTEINES

(30) Priorität: 08.08.1995 DE 19529149; 29.09.1995 DE 19536417
(43) Veröffentlichungstag der Anmeldung: 03.06.1998
(73) Patentinhaber: N.V. Nutricia, 2712 HM Zoetermeer (NL)
(72) Erfinder: SAWATZKI, Günther, D-35516 Münzenberg (DE); BÖHM, Günther, D-61209 Echzell (DE); GEORGI, Gilda, D-61381 Friedrichsdorf (DE); SCHWEIKHARDT, Friedrich, D-61381 Friedrichsdorf (DE)
(74) Vertreter: Köster, Hajo, Dr.
(86) Internationale Anmeldenummer: EP9603515
(87) Internationale Veröffentlichungsnummer: WO9705785

(56) Entgegenhaltungen:
- EP-A- 0 307 559
- EP-A- 0 418 593
- FR-A- 1 497 531
- CHEMICAL ABSTRACTS, vol. 111, no. 11, 11.September 1989 Columbus, Ohio, US; abstract no. 95808, E.LI-CHAN, S.NAKAN: "Enzymic dephosphorylation of bovine casein to improve acid clotting properties and digestibility for infant formula" XP002017623 & JOURNAL OF DAIRY RESEARCH, Bd. 56, Nr. 3, 1989, Seiten 381-390,
- DATABASE FSTA INTERNATIONAL FOOD INFORMATION SERVICE (IFIS), FRANFURT/MAIN, DE 88(05):P0014, S.NAKAI, E.LI-CHAN: "Effect of clotting in stomachs of infants on protein digestibility of milk" XP002017624 & FOOD MICROSTRUCTURE, Bd. 6, Nr. 2, 1987, VANCOUVER, Seiten 161-170,
- DATABASE FSTA INTERNATIONAL FOOD INFORMATION SERVICE (IFIS), FRANFURT/MAIN, DE 85(05):P0114, R.BROCKBANK: "Uses for dairy ingredients in dietary and nutritional foods" XP002017625 & JOURNAL OF THE SOCIETY OF DAIRY TECHNOLOGY, Bd. 37, Nr. 4, 1984, Seiten 127-130,
- DATABASE WPI DERWENT PUBLICATIONS LTD., LONDON, GB 94-079228, MORINAGA MILK IND. CO : "Low protein milk product for child care-contains protein selected from whey protein and/or its hydrolysed matter and L-histidine" XP002017626 & JP,A,06 030 697 (MORINAGA MILK IND. CO)
- DATABASE WPI DERWENT PUBLICATIONS LTD., LONDON, GB 71-48868S, MORINAGA MILK IND. CO: "Modified milk powder for infants" XP002017627 & JP,A,46 025 697 (MORINAGA MILK IND. CO)

## Beschreibung

Die Erfindung betrifft eine Proteinzusammensetzung, eine diese Proteinzusammensetzung enthaltende Säuglingsnahrung sowie die Verwendung dieser Proteinzusammensetzung zur Herstellung von Säuglingsnahrungen.

Für die Herstellung von Säuglingsnahrungen, insbesondere Säuglingsmilchnahrungen, werden unter anderem Kuhmilch bzw. Inhaltsstoffe aus der Kuhmilch eingesetzt. Dazu gehören zum Beispiel die Kuhmilchproteine (Caseine und Molkenproteine). Die Kuhmilchproteine unterscheiden sich nun erheblich von denen der Humanmilch. Einer der wesentlichen Unterschiede besteht dabei im Verhältnis von Caseinen und Molkenproteinen. So weist Kuhmilch ein Molkenprotein/Casein-Verhältnis von ca. 20:80 auf, während dieses Verhältnis bei Humanmilch etwa 60:40 (50:50) beträgt. Ein Unterschied besteht zudem nicht nur im Hinblick auf das Molkenprotein-/Casein-Verhältnis, vielmehr unterscheiden sich auch die einzelnen Molkenproteine und Caseine voneinander. So enthält Humanmilch beispielsweise kein β-Lactoglobulin und auch kein α-Casein. Diese Proteine haben in der Kuhmilch jedoch einen Anteil von ca. 50 % am Gesamtprotein. Im Gegensatz dazu weist das Humanmilch-protein ca. 25 % an sogenannten immunologischen Proteinen, wie Lactoferrin und sekretorischem Immunglobulin A (sIgA) auf. Weitere Unterschiede zwischen humanen und bovinen Proteinen, auch wenn sie namentlich gleich sind, bestehen in der Aminosäurenzusammensetzung, in der räumlichen Struktur und in der chemischen Zusammensetzung. So enthält z.B. humanes K-Casein ca. 40 % und bovines K-Casein nur etwa 10 % Kohlenhydrate. Dies sind nur einige der Unterschiede zwischen den Kuhmilchproteinen und Humanmilchproteinen; es ließen sich noch viele andere aufführen.

Diese Unterschiede bewirken, daß die Aminosäureaufnahme aus dem Magen-Darm-Trakt von Säuglingen aus Humanmilchproteinen anders ist als aus den Proteinen handelsüblicher Säuglingsnahrungen, die auch als Formelnahrungen bezeichnet werden. Derartige Formelnahrungen sind "künstlich" hergestellt. Mit anderen Worten, man versucht ausgehend von tierischen und/oder pflanzlichen Ausgangsprodukten, wobei es sich insbesondere um Proteine, Fette und Kohlenhydrate handelt, die Muttermilch möglichst "genau" nachzubauen.

Die qualitativen Unterschiede zwischen Proteinen in Formelnahrungen und Humanmilchproteinen bzw. Frauenmilchproteinen bewirken in ihrer Summe einen unterschiedlichen Verdauungsablauf. So ist beispielsweise die Verweildauer der Humanmilchproteine im Magen kürzer als die der Proteine aus Formelnahrungen. Dagegen erfolgt die enzymatische Aufspaltung der Humanmilchproteine im Dünndarm wesentlich langsamer als die der Proteine aus Formelnahrungen. Dies bewirkt, daß das Angebot an Proteinen, Peptiden und Aminosäuren in den verschiedenen Abschnitten des Magen-Darmkanals bei Verdauung von Proteinen aus Formelnahrungen nicht dem Angebot während der Verdauung von Humanmilchproteinen entspricht. Dieses für die einzelnen Abschnitte des Magen-Darm-Kanales spezifische Angebot ist ein wichtiges Signal für die morphologische und funktionelle Entwicklung des jeweiligen Darmabschnittes. Bei fehlender Angleichung der Verdauungsabläufe von Proteinen aus Formelnahrungen und Frauenmilchproteinen kommt es zu einer unterschiedlichen Entwicklung wichtiger intestinaler Funktionen. Diese Unterschiede können bis ins Erwachsenenalter bestehen bleiben und Grundlage für eine erhöhte Anfälligkeit gegenüber gastrointestinalen Erkrankungen bewirken.

Es wurde nun gefunden, daß während eines Zyklus von einer Mahlzeit zur nächsten die Aufnahme von Aminosäuren aus Proteinen aus Formelnahrungen praktisch zu keinem Zeitpunkt des Zyklus der Aminosäureaufnahme aus einer Nahrung mit gleicher Menge Humanmilchproteinen entspricht. Die Menge sowie das Verhältnis der aufgenommenen einzelnen Aminosäuren zueinander beeinflussen nicht nur die Aminosäureversorgung der Gewebe (und damit die gewebespezifische Proteinsynthese), sondern sie spielen als Signalgeber für die Sekretion von Hormonen und Enterohormonen eine wichtige Rolle in der Regulation des postprandialen Stoffwechsels. In den ersten Lebensmonaten werden sowohl die morphologische Entwicklung des Gehirns, die morphologische Ausreifung und funktionelle Determinierung des Magen-Darm-Kanales als auch die Differenzierung des Stoffwechsels abgeschlossen. Damit haben die während dieser Zeit durch die Nahrung ausgelösten Regulationsvorgänge große Bedeutung für die spätere Entwicklung. Wegen der zeitlichen Determinierung der Entwicklungsphasen trifft dies in besonderer Weise für das Gehirn zu.

Aufgabe der vorliegenden Erfindung ist es, Proteingemische für eine Säuglingsnahrung bzw. Formelnahrung bereitzustellen, welche ebenso gute metabolische Voraussetzungen für die normale Entwicklung des Kindes schafft wie das bei der Ernährung mit Frauenmilchproteinen bzw. Humanmilchproteinen der Fall ist.

Gelöst wird diese Aufgabe durch die Lehre der Ansprüche.

Bei der erfindungsgemäßen Proteinzusammensetzung und Formelnahrung (d.h. Säuglingsnahrung) werden übliche Proteine, die schon bisher zur Herstellung von Formelnahrungen eingesetzt werden, mit auf die nachstehende Weise modifizierten Proteinen vermischt, so daß der zeitliche Ablauf der Verdauung in den verschiedenen Abschnitten des Magen-Darm-Kanales den Verhältnissen während der Verdauung von Frauenmilchproteinen qualitativ und quantitativ im wesentlichen angepaßt ist. Mit anderen Worten, bei der Herstellung der erfindungsgemäßen Proteinzusammensetzungen und Formelnahrungen werden modifizierte und nicht-modifizierte Proteine so gemischt, daß die Verdauung des Protein-gemisches sowohl im zeitlichen Ablauf als auch in Quantität und Qualität der von Frauenmilchproteinen im wesentlichen entspricht.

Als Rohstoff und somit als Proteine für die erfindungsgemäßen Säuglingsnahrungen können alle bisher bekannten Proteinquellen, beispielsweise Proteine, Oligopeptide, Dipeptide, und/oder freie Aminosäuren, die auch in Form ihrer Salze, Hydrochloride etc. vorliegen können, eingesetzt werden. Es können somit bovine Caseine, Molkenproteine sowie deren Einzelproteine (α-Casein, β-Casein, κ-Casein, α-Lactalbumin, β-Lactoglobulin, Serumalbumin, Laktoferrin, Immunglobuline) sowie Kombinationen dieser Proteine als auch Mischungen mit anderen Proteinen, wie beispielsweise Sojaproteinen, eingesetzt werden. Auch andere Proteine tierischer oder pflanzlicher Herkunft, die für die menschliche Ernährung geeignet sind, können Anwendung finden. Es handelt sich bei diesen Proteinen um übliche Proteine, die im Rahmen der vorliegenden Unterlagen als nicht-modifizierte Proteine bezeichnet werden.

Erfindungsgemäß sind nun neben den üblichen, nicht modifizierten Proteinen auch modifizierte Proteine vorhanden. Derartige modifizierte Proteine werden durch Modifizieren derartiger üblicher Proteine nach bekannten Methoden erhalten, wodurch der Verdauungsablauf dieser modifizierten Proteine verlangsamt wird. Mit anderen Worten, die Kinetik der Verdauung wird geändert, so daß die Verdauung langsamer erfolgt.

Als übliche Proteine bzw. Ausgangsproteine, die erfindungsgemäß modifiziert werden können, können eingesetzt werden: bovine Caseine, Molkenproteine sowie deren Einzelproteine (α-Casein, β-Casein, κ-Casein, α-Lactalbumin, β-Lactoglobulin, Serumalbumin, Laktoferrin, Immunglobuline), spezielle Kombinationen dieser Proteine als auch Mischungen mit anderen Proteinen, wie z.B. Sojaproteinen. Möglich sind auch andere Proteine tierischer oder pflanzlicher Herkunft, die für die menschliche Ernährung geeignet sind.

Die Modifizierung derartiger Proteine kann nach folgenden Methoden durchgeführt werden:
1) Polymerisation und/oder Quervernetzung der Proteine mittels Enzymen wie Transglutaminasen (Matheis, G. Whitaker, J.R.; A Review: Enzymatic Cross-linking of Proteins Applicable to Foods; J Food Biochemistry 11, 309-327, 1987 oder Ikura, K., Sasaki, R. Motoki, M.; Use of Transglutaminase in Quality Improvement and processing of food proteins. Comments Agric.& Food Chemistry 2 (6), 389-407, (1992).)
2) Einfügen bestimmter Aminosäuren ( d.h. solche Aminosäuren, insbesondere Prolin, und Aminosäurensequenzen, insbesondere prolinhaltig, die den Verdauungsablauf verlangsamen) in die Proteinkette mittels gentechnologischer Verfahren (WO 9502692-A1 und WO 9428126-A2) oder mit Hilfe der sogenannten Plastein-Reaktion (Lorenzen, C.P. Schlimme, E.; Experimentelle Untersuchungen zum Vergleich der Enzymduzierten Proteinaggregation (EIPA) und der Plastein-Reaktion an Natrium-Caseinat-Proteolysaten. Kieler Milchwirtschaftliche Forschungsberichte 43, 45-51, 1991 oder Sukan, G., Andrews, A.T.; Application of the plastein reaction to casein and to skim-milk powder, l and l; J. Dairy Res. 49, 265-293. 1982).
3) Glycosylierung, d.h. durch chemische oder enzymatische (Glycosidasen) Anlagerung von Zuckerketten (Oligosaccharide) verschiedener Länge oder Zusammensetzung an die Proteine (Mencke A.J., Cheung, D.T., World, F.; Attachment of Oligosaccharide-Asparagine Derivates to Proteins; Activation of Asparigine with Ninhydrin and Coupling to Protein by Reductive Amination; Methods in Enzymology, 138, 409-413, 1987 oder Yan, S.B.; Covalent Attachment of Oligosaccharide-Asparagine Derivatives: Incorporation into Glutamine Residues with the Enzyme Transglutaminase; Methods in Enzymology, 138, 413-418, 1987)
4) Dephosphorylierung von Proteinen mittels Phosphatasen (Bingham, E., Farrell, H.M., Dahl, K.J.; Removal of Phosphate groups from Casein with Potato Acid Phosphatease; Biochim. Biophys. Acta, 429, 448-460, 1976 oder Yamauchi, K., Yoneda, Y., Effect of Dephosphorylation of Casein on its Coagulation and Proteolysis by Chymosin; Agric. Biol. Chem. 42, 1031-1035, 1978).
5) Teilweise oder vollständige thermische Umstrukturierung der Proteine (Jost R., Functional characteristics of dairy proteins, Trends in Food Science & Technology, 4, 283-288, 1993).

Für die Herstellung der erfindungsgemäßen Proteinzusammensetzungen werden nicht-modifizierte und modifizierte Proteine vermischt, so daß mindestens 15 Gew.-% der Proteinzusammensetzung bzw. Proteinmischung modifizierte Proteine sind. Zur Herstellung von Säuglingsnahrungen bzw. Säuglingsmilchen wird dann eine derartige Proteinzusammensetzung ergänzt mit den für die Herstellung von derartigen Säuglingsnahrungen bzw. Säuglingsmilchen üblichen anderen Bestandteile, wie Fetten und Kohlenhydraten sowie gegebenenfalls und gewünschtenfalls Vitaminen und Mineralstoffen. Für die Produktion der Säuglingsnahrungen bzw. Säuglingsmilchen können die üblichen technologischen Verfahren zur Anwendung gebracht werden.

Nachstehend sind einige Mischungsverhältnisse verschiedener modifizierter und nicht-modifizierter Proteine aufgeführt; diese Mischungen stellen erfindungsgemäße Proteinzusammensetzungen bzw. Proteingemische dar.
1) 40% Caseinat (mind. zu 30 % dephosphoryliert); 60% Molkenproteine, nicht modifiziert.
2) ≥ 20% Caseinat (mind. zu 60% dephosphoryliert); ≤ 30% nicht modifiziertes Casein, ≥ 15% polymerisierte (quervernetzte) Molkenproteine, < 35% nicht modifizierte Molkenproteine.
3) 50% nicht modifiziertes Caseinat, ≥ 15% glycosylierte Molkenproteine, ≤ 35% nicht modifizierte Molkenproteine.
4) 20% nicht modifiziertes Caseinat, 20% quervernetztes Caseinat, ≥ 15% thermisch modifizierte Molkenproteine, ≤ 45% nichtmodifizierte Molkenproteine.

Bisher ging man im übrigen davon aus, daß es für die Ernährung eines Kindes mit Hilfe von Formelnahrungen vorteilhaft sei, wenn man die zur Verfügung stehenden pflanzlichen und/oder tierischen Proteine immer schneller verdaulich mache. Erfindungsgemäß wurde nun überraschend gefunden, daß der Verdauungsablauf der Proteine in handelsüblichen Säuglingsnahrungen deutlich schneller ist als die der Humanmilchproteine, was zu den oben beschriebenen signifikanten Unterschieden in der Verdauung zwischen Humanmilchproteinen und Proteinen handelsüblicher Formelnahrungen führt. Erfindungsgemäß ist es darum erforderlich, den Verdauungsablauf der Proteingemische aus pflanzlichen und/oder tierischen Proteinen für Formelnahrungen im Gegensatz zu handelsüblichen Proteingemischen durch die hier beschriebene Modifizierung(en) zu verlangsamen, beispielsweise durch Polymerisation und Quervernetzung und/oder durch Einfügen bestimmter Aminosäuren, beipielsweise Prolin, in die Proteinkette. Auf diese Art modifizierte Proteingemische können dann langsamer und somit vergleichbarer den Humanmilchproteinen verdaut werden.

Zur Beurteilung der vorgenommenen Modifizierung der Proteine werden die Plasmaaminosäurenspiegel von Kindern herangezogen. Die Modifizierung der Proteine kann an den postprandialen Plasmaaminosäuren der essentiellen und nicht-essentiellen Aminosäuren 15, 30, 45 und 60 min nach Gabe von Formelnahrungen gemessen werden, welche diese modifizierten Proteine enthalten. Die Plasmakonzentration der Summe der essentiellen bzw. der nicht-essentiellen Aminosäuren (anders ausgedrückt: die Gesamtmenge dieser Aminosäuren pro Volumeneinheit oder Gewichtseinheit im Blut) darf sich über einen Zeitraum von 15 bis 60 min um nicht mehr als den Faktor 1,5 verändern. Mit anderen Worten, die in diesem Zeitintervall liegenden Werte dürfen nicht mehr als um den Faktor 1,5 voneinander abweichen. Außerdem darf die Plasmakonzentration der Summe der essentiellen Plasmaaminosäuren bzw. die Plasmakonzentration der Summe der nicht essentiellen Plasmaaminosäuren 15 bis 60 min und ca. 90 und ca. 180 min nach der Nahrungsaufnahme um nicht mehr als maximal ± 20 % bzw. um nicht mehr als maximal ± 50 % von der Plasmakonzentration der Summe der essentiellen bzw nicht essentiellen Plasmaaminosäuren nach Gabe von Humanmilch abweichen. Bezogen auf die einzelnen Aminosäuren kann die Modifizierung der Proteine durch die entsprechenden Konzentrationanstiege und -abfälle der Plasmaaminosäuren gemessen werden, deren Verläufe 15, 30, 45 und 60 min mit denen nach Gabe von Humanmilch vergleichbar sind.

Um die Plasmaaminosäurekonzentrationen bestimmen zu können, kann man sich folgender Analysenmethode bedienen:

Georgi, G., Pietsch, C., Sawatzki, G.; High-performance liquid chromatographic determination of amino acids in protein hydrolysates and in plasma using automated pre-column derivatization with o-phthaldialdehyde/2mercaptoethanol. J. Chromat. 613, 35-42, 1993.

Die Analyse der Plasmakonzentration an Aminosäuren kann man an einem Kind durchführen. Zweckmäßigerweise setzt man jedoch Gruppen ein, um verläßlichere Daten zu erhalten.

Die erfindungsgemäße Säuglingsnahrung enthält neben der geschilderten Proteinzusammensetzung auch weitere, für die Ernährung eines Kindes unerläßliche und gewünschte Bestandteile, beispielsweise Fette, Mineralstoffe, Vitamine, Kohlenhydrate etc. Diese weiteren Bestandteile sind üblicher Natur und somit bekannt, so daß sie keiner weiteren Erläuterung bedürfen. Die erfindungsgemäße Proteinzusammensetzung wird in den erfindungsgemäßen Säuglingsnahrungen zweckmäßigerweise in der gleichen Menge eingesetzt wie die bisher bekannten Proteinzusammensetzungen.

Die Wirkung bzw. der Effekt der erfindungsgemäßen Proteinzusammensetzung bzw. Säuglingsnahrung wird durch Messung der zeitabhängigen Aminosäurekonzentrationen im Plasma vor und nach einer Mahlzeit mit einer erfindungsgemäßen Proteinzusammensetzung/Säuglingsnahrung bestimmt. Ergänzend dazu kann man die Magenverweildauer, die Darmpassagezeit, den Verdauungsablauf mit Hilfe von Enzymen (Pepsin, Pankreatin, Trypsin, Chymotrypsin, Carboxypeptidasen, Aminopeptidasen), die Synthese wichtiger Markerproteine bzw. die Gesamtprotein-Syntheserate messen.

Durch die erfindungsgemäße Säuglingsnahrung und Proteinzusammensetzung schafft man gleich-gute metabolische Voraussetzungen für die normale Entwicklung des Kindes wie bei Humanmilchproteinen. Dies betrifft vor allem die morphologische und funktionelle Entwicklung des Magen-Darm-Kanals (inklusive Leber und Pankreas), die Aminosäureversorgung für die Synthese körpereigener Proteine in allen Geweben (besonders wichtig für die Entwicklung des Nervengewebes) und die hormonellen Signale einer Mahlzeit. Damit wird nicht nur eine abgestimmte Stoffwechsellage erreicht sondern auch ein ausgeglichenes Verhältnis einzelner Stoffwechselwege zueinander für spätere Lebensphasen "programmiert".

Die Erfindung wird im folgenden anhand mehrerer, bevorzugte Ausführungsformen darstellende Beispiele näher erläutert.

### Beispiel 1: Adaptierte Säuglingsmilchnahrung als Sprühprodukt (Chargengröße 100 kg)

172,2 kg Sahne (mit 10,2 % Milchfett und 11,72 kg Magermilchtrockensubstanz) werden in einen heizbaren Tank mit Rührwerk gegeben und auf 70 °C erwärmt. Unter intensivem Rühren werden nacheinander 30,4 kg entmineralisiertes, glycosyliedes Molkenpulver (13,5 % Protein), 26,9 kg Lactose, 0,025 kg Taurin, 0,3 kg Kaliumchlorid (vorgelöst in 10 l Wasser von 60 °C), 0,4 kg Calciumcarbonat und 0,5 kg Mineralstoffmischung zugegeben und vollständig aufgelöst. 0,5 kg Emulgator werden in 11,2 kg heißer Pflanzenfettmischung (50 - 60 °C) aufgelöst und dem Ansatz zugegeben. Danach wird die Vitaminmischung (0,5 kg) eingerührt. Der fertige Ansatz wird auf 70 - 75 °C erwärmt und bei 180 bar homogenisiert. Danach wird das Konzentrat über einen Erhitzer auf 95 °C erwärmt, auf 70 °C gekühlt und sprühgetrocknet.

### Beispiel 2: Adaptierte Säuglingsmilchnahrung als Sprühprodukt (Chargengröße 100 kg)

In einem beheizbaren Behälter mit Intensivrührwerk werden ca. 160 l Wasser auf 70 °C erhitzt. Unter intensivem Rühren werden nacheinander 3,7 kg dephosphoryliertes Casein (89 % Protein), 1,0 kg Molkenproteinhydrolysat (79 % Protein), 30,4 kg entmineralisiertes Molkenpulver (13,5 % Protein), 26,9 kg Lactose, 0,025 kg Taurin, 0,3 kg Kaliumchlorid (vorgelöst in 10 l Wasser von 60 °C), 0,4 kg Calciumcarbonat und 0,5 kg Mineralstoffmischung zugegeben und vollständig aufgelöst. 0,5 kg Emulgator werden in 11,2 kg heißer Pflanzenfettmischung (50 - 60 °C) aufgelöst und dem Ansatz zugegeben. Danach wird die Vitaminmischung (0,5 kg) eingerührt. Der fertige Ansatz wird auf 70 - 75 °C erwärmt und bei 180 bar homogenisiert. Danach wird das Konzentrat über einen Erhitzer auf 95 °C erwärmt, auf 70 °C gekühlt und sprühgetrocknet.

### Beispiel 3: Adaptierte Säuglingsmilchnahrung als Sprühprodukt (Chargengröße 100 kg)

In 100 l heißem Wasser (ca. 70 - 75 °C) werden unter intensivem Rühren nacheinander aufgelöst: 36,8 kg Lactose, 14,8 kg Maltodextrin, 3,0 kg Stärke, 7,8 kg gemäß der oben beschriebenen Modifizierungsmethode 5) thermisch umstrukturiertes Molkenproteinkonzentrat, 6,5 kg Casein, 0,09 kg reduziertes Glutathion, 0,6 kg Kaliumchlorid (in ca. 5 l warmem Wasser von 60 °C vorgelöst), 0,27 kg tri-Kaliumcitrat (in ca. 5 l Wasser von 60 °C vorgelöst), 0,19 kg Citronensäure (in ca. 3 l heißem Wasser von 60 °C vorgelöst) und 1,4 kg Mineralstoffmischung. 2 kg Emulgatoren werden in heißem (50 - 60 °C) aufgeschmolzenem Fett (26,3 kg) vollständig aufgelöst und die Mischung dem Ansatz zugegeben. Danach wird die Vitaminmischung (0,31 kg) zugesetzt und vollständig aufgelöst. Der Ansatz wird auf 70 - 75 °C erwärmt und mit 180 - 200 bar homogenisiert. Danach wird das Konzentrat in einem Erhitzer auf 95 °C erwärmt und anschließend sprühgetrocknet.

## Patentansprüche

1. Proteinzusammensetzung für Säuglingsnahrungen auf Basis üblicher Proteine,
dadurch **gekennzeichnet**,
daß sie mindestens 15 Gew.-%, bezogen auf die Gesamtmenge der Proteine, modifizierte Proteine, deren Verdauungsablauf gegenüber den als Ausgangsproteinen dienenden, nicht modifizierten, üblichen Proteinen verlangsamt ist, enthält.

2. Proteinzusammensetzung nach Anspruch 1,
dadurch **gekennzeichnet**,
daß sie modifizierte Proteine enthält, die durch Modifizierung der folgenden Ausgangsproteine erhalten wurden: bovine Caseine, Molkenproteine, Einzelproteine der Molkenproteine und Soyaproteine und Mischungen davon.

3. Proteinzusammensetzung nach Anspruch 1 oder 2,
dadurch **gekennzeichnet**,
daß die modifizierten Proteine durch Polymerisation der Ausgangsproteine, durch Quervernetzung der Ausgangsproteine, durch Einfügen von den Verdauungsablauf verlangsamenden Aminosäuren und Aminosäurensequenzen in die Proteinkette, durch Anlagerungen von Zuckerketten an die Proteinkette, durch Dephosphorylierung der Ausgangsproteine und/oder durch gezielte thermische Umstrukturierung der Ausgangsproteine modifiziert sind.

4. Proteinzusammensetzung nach einen der vorhergehenden Ansprüche,
dadurch **gekennzeichnet**,
daß sie derart modifizierte Proteine in solchen Mengenanteilen enthält, daß bei einem Kind, das mit einer diese Proteinzusammensetzung enthaltenden Säuglingsnahrung gefüttert wird, die Gesamtmenge an essentiellen Aminosäuren pro Volumeneinheit Blut über einen Zeitraum von 15 bis 60 min nach der Nahrungsaufnahme sich nicht mehr als um den Faktor 1,5 verändert und von 15 bis 60 min sowie 90 und 180 min nach der Nahrungsaufnahme nicht mehr als ± 20 % von der Gesamtmenge an essentiellen Aminosäuren eines mit einer die gleiche Menge an Proteinen enthaltenden Menge Humanmilch gefütterten Kindes abweicht.

5. Proteinzusammensetzung nach Anspruch 4,
dadurch **gekennzeichnet**,
daß sie derart modifizierte Proteine in solchen Mengenanteilen enthält, daß bei einem Kind, das mit einer diese Proteinzusammensetzung enthaltenden Säuglingsnahrung gefüttert wird, die Gesamtmenge an nicht-essentiellen Aminosäuren pro Volumeneinheit Blut über einen Zeitraum von 15 bis 60 min nach der Nahrungsaufnahme sich nicht mehr als um den Faktor 1,5 verändert und von 15 bis 60 min sowie ca. 90 und ca. 180 min nach der Nahrungsaufnahme nicht mehr als ± 50 % von der Gesamtmenge an nicht-essentiellen Aminosäuren eines mit einer die gleiche Menge an Proteinen enthaltenden Menge Humanmilch gefütterten Kindes abweicht.

6. Proteinzusammensetzung nach einem der vorhergehenden Ansprüche,
dadurch **gekennzeichnet**,
daß sie Caseine enthält und daß mindestens 30 % der an die Caseine gebundenen Phosphatreste abgespalten sind.

7. Proteinzusammensetzung nach einem der vorhergehenden Ansprüche,
dadurch **gekennzeichnet**,
daß sie zur weiteren Optimierung auch Peptide und/oder freie Aminosäuren enthält.

8. Säuglingsnahrung, insbesondere Säuglingsmilchnahrung, die Fette, Kohlenhydrate und Proteine sowie gegebenenfalls weitere für die Ernährung erforderliche oder gewünschte Bestandteile enthält,
dadurch **gekennzeichnet**,
daß sie als Proteine eine Proteinzusammensetzung nach einem der Ansprüche 1 bis 7 enthält.

9. Verwendung einer Proteinzusammensetzung nach einem der Ansprüche 1 bis 7 zur Herstellung von Säuglingsnahrungen, insbesondere Säuglingsmilchnahrungen.

## Claims

1. Protein composition for baby foods which contains normal proteins,
characterised in that
it contains at least 15 weight-%, based on the total amount of the proteins, modified proteins, the course of whose digestion is slowed relative to the unmodified, normal proteins serving as starting proteins.

2. Protein composition according to claim 1,
characterised in that
it contains modified proteins which have been obtained by modifying the following starting proteins: bovine caseins, whey proteins, individual proteins of whey proteins, and soya proteins and mixtures thereof.

3. Protein composition according to claim 1 or 2,
characterised in that
the modified proteins are modified by polymerization of the starting proteins, by crosslinking of the starting proteins, by introduction of amino acids and amino acid sequences slowing the course of digestion into the protein chain, by attachment of sugar chains to the protein chain, by dephosphorylation of the starting proteins and/or by deliberate thermal rearrangement of the starting proteins.

4. Protein composition according to claim 1 or 2,
characterised in that
it contains such modified proteins in such proportions that in a child fed with a baby food containing this protein composition the total quantity of essential amino acids per unit volume of blood varies by not more than the factor 1.5 over a period from 15 to 60 mins after ingestion of the food and from 15 to 60 mins and also 90 and 180 mins after ingestion of the food does not differ more than ± 20 % from the total quantity of essential amino acids of a child fed with a quantity of human milk containing the same quantity of proteins.

5. Protein composition according to one of the preceeding claims,
characterised in that
it contains such modified proteins in such proportions that in a child fed with a baby food containing this protein composition the total quantity of non-essential amino acids per unit volume of blood varies by not more than the factor 1.5 over a period from 15 to 60 mins after ingestion of the food and from 15 to 60 mins and also ca. 90 and ca. 180 mins after ingestion of the food does not differ more than ± 50 % from the total quantity of non-essential amino acids of a child fed with a quantity of human milk containing the same quantity of proteins.

6. Protein composition according to one of the preceeding claims
characterised in that
it contains caseins and that at least 30 % of the phosphate residues bound to the caseins have been cleaved off.

7. Protein composition according to one of the preceeding claims
characterised in that
for further optimisation it also contains peptides and/or free amino acids.

8. Baby food, in particular milk baby food, which contains fats, carbohydrates and proteins and also optionally other necessary or desired components for nutrition,
characterised in that
as proteins it contains a protein composition according to one of the Claims 1 to 7.

9. Use of a protein composition according to one of claims 1 to 7 for the production of baby foods, in particular milk baby foods.

## Revendications

1. Composition de protéines destinée à l'alimentation infantile, à base de protéines usuelles, caractérisée par le fait qu'elle contient au moins 15 % en poids, par rapport à la teneur totale en protéines, de protéines modifiées, dont la durée de digestion est prolongée par rapport à celle des protéines usuelles, non modifiées, qui servent de protéines de départ.

2. Composition de protéines selon la revendication 1, caractérisée par le fait qu'elle contient des protéines modifiées qui ont été obtenues par modification des protéines de départ suivantes : caséine bovine, protéines du lait, protéines particulières parmi les protéines du lait, protéines du soja et mélanges de ces produits.

3. Composition de protéines selon la revendication 1 ou 2, caractérisée par le fait que la modification des protéines modifiées intervient par polymérisation des protéines de départ, réticulation des protéines de départ, insertion dans la chaîne protéique d'acides aminés et de séquences d'acides aminés ralentissant le processus de digestion, dépôt de chaînes sucre sur les chaînes protéiques, déphosphorylation des protéines de départ et/ou restructuration thermique ciblée des protéines de départ.

4. Composition de protéines selon l'une quelconque des revendications précédentes, caractérisée par le fait qu'elle contient des protéines ainsi modifées dans une proportion pondérale telle que la quantité totale d'acides aminés essentiels par unité volumique de sang présente chez un enfant alimenté avec un aliment infantile contenant cette composition de protéines, pendant les 15 à 60 minutes suivant l'ingestion de l'aliment, ne varie pas de plus d'un facteur de 1,5, et pendant les 15 à 60 minutes ainsi que les 90 et 180 minutes après l'ingestion de l'aliment, ne s'écarte pas de plus de ±20 % de la quantité totale d'acides aminés essentiels présente chez un enfant alimenté avec la même quantité d'un lait maternel contenant la même quantité de protéines.

5. Composition de protéines selon la revendication 4, caractérisée par le fait qu'elle contient des protéines ainsi modifiées en une proportion telle que la quantité totale d'acides aminés non essentiels par unité volumique de sang présente chez un enfant qui a été alimenté avec un aliment infantile contenant cette composition de protéines ne varie pas, pendant les 15 à 60 minutes après l'ingestion de l'aliment, de plus d'un facteur de 1,5, et pendant les 15 à 60 minutes ainsi qu'environ 90 et environ 180 minutes après l'ingestion de l'aliment, ne s'écarte pas de plus de ±50% de la quantité totale d'acides aminés non essentiels présente chez un enfant alimenté avec la même quantité d'un lait maternel contenant la même quantité de protéines.

6. Composition de protéines selon l'une quelconque des revendications précédentes, caractérisée par le fait qu'elle contient de la caséine et qu'au moins 30 % du phosphate résiduel lié à la caséine sont libérés.

7. Composition de protéines selon l'une quelconque des revendications précédentes, caractérisée par le fait que, pour une opitimisation encore plus efficace, elle contient également des peptides et/ou des acides aminés libres.

8. Aliment infantile, en particulier lait infantile, contenant des matières grasses, des hydrates de carbone et des protéines ainsi qu'éventuellement d'autres constituants nécessaires ou souhaitables pour l'alimentation, caractérisé par le fait qu'il contient, en tant que protéines, une composition de protéines selon l'une quelconque des revendications 1 à 7.

9. Utilisation d'une composition de protéines selon l'une quelconque des revendications 1 à 7 pour la préparation d'aliments infantiles, en particulier de laits infantiles.
